# FASCICULE DE BREVET EUROPEEN

(11) **EP 0 707 290 B1**
(45) Date de publication et mention de la délivrance du brevet: **16.07.2003**
(21) Numéro de dépôt: 95402124.2
(22) Date de dépôt: 21.09.1995
(51) Int. Cl.: G07F 7/10, G06F 1/00

(54) **Procédé de chargement d'une zone mémoire protégée d'un dispositif de traitement de l'information et dispositif associé**
Verfahren und Vorrichtung zum Laden einer geschützten Speicherzone in einem Datenverarbeitungsgerät
Method and apparatus for loading a protected memory zone in data processing equipment

(30) Priorité: 11.10.1994 FR 9412100
(43) Date de publication de la demande: 17.04.1996
(73) Titulaire: CP8 Technologies, 78431 Louveciennes (FR)
(72) Inventeur: Ugon, Michel, F-78310 Maurepas (FR)
(74) Mandataire: Corlu, Bernard

(56) Documents cités:
- EP-A- 0 440 800
- WO-A-88/01818
- US-A- 5 036 461

## Description

L'invention est relative à un procédé de chargement d'un dispositif de traitement de l'information comprenant des moyens de traitement de l'information, une mémoire, des moyens de coopération avec un premier objet portatif et un module comprenant des moyens de traitement de l'information et une mémoire non volatile incluant une zone protégée accessible en lecture et écriture aux moyens de traitement mais inaccessible au moins en écriture depuis l'extérieur du module, le premier objet portatif comportant des moyens de traitement de l'information et une mémoire non volatile incluant une zone protégée accessible en lecture et écriture aux moyens de traitement mais inaccessible au moins en écriture depuis l'extérieur de l'objet portatif, la zone protégée du premier objet portatif contenant des données et/ ou des programmes.

Dans la procédure de chargement d'un tel dispositif de traitement de l'information, on s'intéresse particulièrement au chargement du module car celui-ci, de par sa structure, est tout désigné pour contenir des données ou programmes confidentiels dans la zone protégée de sa mémoire.

Un dispositif de ce genre est connu, dans lequel le module est lui-même un objet portatif coopérant avec le dispositif par l'intermédiaire d'un lecteur d'objet portatif. Dans ce cas, le chargement du module s'effectue indépendamment du dispositif, lors d'une phase initiale de personnalisation du module, effectuée chez un organisme habilité. Dans l'environnement sécurisé de cet organisme, le chargement du module ne pose pas de problème particulier.

En revanche, le chargement de la zone protégée du module alors que celui-ci est déjà installé dans le dispositif de traitement est plus délicat, en particulier lorsque ce dispositif est lui-même déjà installé hors des locaux de l'organisme habilité, dans un environnement non sécurisé.

Un premier problème que vise à résoudre l'invention est de proposer un procédé pour charger de façon sécuritaire la zone protégée du module, quel que soit le caractère amovible ou non de celui-ci, et quelle que soit la nature sécuritaire ou non de l'environnement dans lequel on effectue ce chargement au cours de la vie du dispositif de traitement.

Le document EP-A-0 440 800 enseigne une communication entre une carte maître et une carte d'usager, par le biais d'un terminal. La carte maître, qui détient une clé mère, génère une clé fille à partir de la clé mère et d'un identifiant de la carte d'usager, puis transmet cette clé fille à la carte d'usager, via le terminal. Ces deux cartes peuvent ainsi effectuer une procédure cryptographique commune, basée sur ces deux clés. On constate que, dans cette opération de transfert de clé, le terminal n'est pas vraiment chargé avec une clé, en vue d'une utilisation ultérieure. Par ailleurs, le terminal ne comporte pas de module de sécurité pour accueillir cette clé de façon protégée.

Le document EP-A- 0 193 920 enseigne de charger en mémoire RAM d'un terminal son programme de fonctionnement au moyen d'une carte d'initialisation. Ensuite, le terminal fonctionne en coopérant avec une carte client. Les deux cartes ne possèdent pas de processeur sécurisé incorporant une mémoire à accès protégé : le programme est donc stocké dans une mémoire non sécurisée de la carte d'initialisation. Il n'est pas non plus prévu dans le terminal de processeur sécurisé incorporant une mémoire à accès protégé pour accueillir ce programme : il n'est d'ailleurs prévu qu'un seul processeur. Ce chargement n'est donc pas de nature sécuritaire.

L'invention concerne à cet effet un procédé selon la revendication 1.

Ainsi, selon l'invention, le chargement sécuritaire du module est obtenu en établissant un dialogue entre ce module et un objet portatif extérieur, possédant la même structure sécuritaire que lui, et en effectuant un transfert d'informations confidentielles entre leurs zones protégées respectives.

Un second aspect de l'invention concerne un procédé pour délivrer une prestation de service déterminée nécessitant l'intervention du premier objet portatif et d'un second objet portatif comportant des moyens de traitement de l'information et une mémoire non volatile incluant une zone protégée accessible en lecture et écriture aux moyens de traitement mais inaccessible au moins en écriture depuis l'extérieur de l'objet portatif, la zone protégée contenant des données et/ou des programmes, les données et/ou programmes contenues dans la zone protégée des premier et second objet portatif définissant leurs droits et obligations respectifs vis-à-vis de ladite prestation de service.

Par exemple, les fonctions d'authentification des objets portatifs, de chiffrement des données, ou encore de certification ou de signature des informations, dans les objets portatifs, nécessitent l'usage d'objets portatifs secondaires contenant des secrets corrélés aux secrets des objets portatifs principaux.

Ceci est notamment le cas des applications de paiement où il est possible d'envoyer un nombre aléatoire aux deux objets et de comparer le résultat d'un calcul effectué dans chaque objet sur la base d'une clé protégée et d'un algorithme cryptographique approprié. Lorsque les deux résultats sont identiques on peut en déduire que l'objet portatif secondaire a authentifié l'objet portatif principal. Le processus peut s'effectuer dans chaque sens pour effectuer une authentification mutuelle.

Dans un tel cas, il est donc nécessaire de posséder deux objets portatifs électroniques et par voie de conséquence de machines ou d'appareils capables de réaliser l'interface entre les deux objets. Ces appareils doivent donc comporter deux canaux de communication avec les deux objets et en particulier deux systèmes de connectique qui viennent accroître les coûts et les encombrements, et diminuer la fiabilité des équipements.

Un second problème que vise à résoudre l'invention est donc d'éviter la présence simultanée de deux dispositifs de lecture des objets portatifs dans les appareils.

Selon l'invention, ce problème est résolu par un second procédé défini par les caractéristiques de la revendication 2.

L'invention concerne aussi deux dispositifs de traitement de l'information conçus pour mettre en oeuvre respectivement les deux procédés précités, et définis par les revendications 7 et 8.

D'autres détails et avantages de l'invention apparaîtront au cours de la description suivante d'une forme de réalisation préférée mais non limitative en regard des dessins annexés, sur lesquels :
- la figure 1 représente le schéma d'un dispositif de traitement de l'information selon l'invention et deux objets portatifs destinés à coopérer successivement avec lui ; et
- la figure 2 définit l'ensemble des opérations relatives à une application particulière de l'invention.

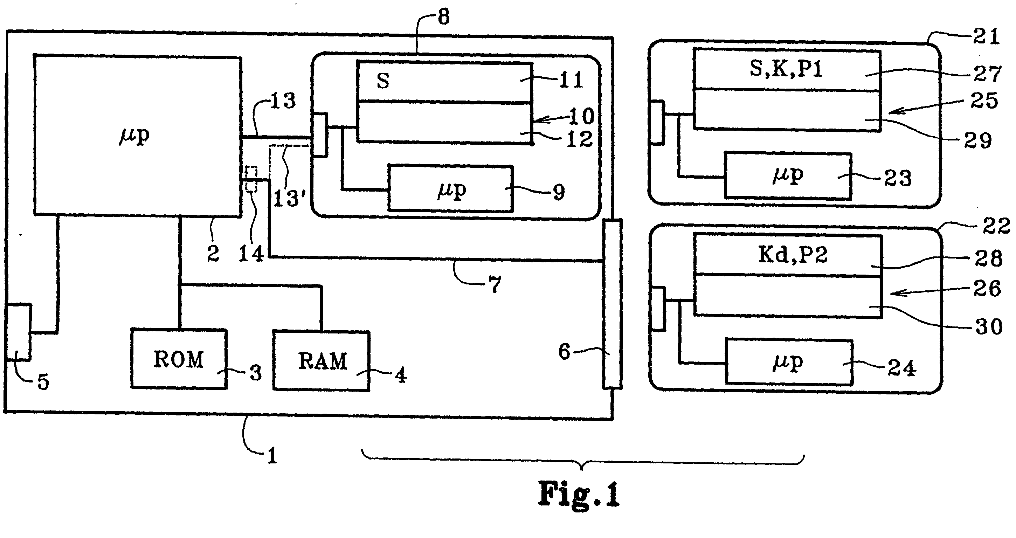

Le dispositif de traitement de l'information 1 représenté sur la figure 1 comprend de façon connue en soi un microprocesseur 2 auquel sont reliées une mémoire ROM 3, une mémoire RAM 4, une interface de transmission 5 permettant au dispositif de communiquer avec un autre dispositif semblable, soit directement, soit au travers d'un réseau de communication. Il comprend aussi un lecteur d'objet portatif 6 agencé pour recevoir un objet portatif du type carte à microcircuits, par exemple tel que décrit dans les brevets français 2.461.301 et 2.401.459 au nom de la Demanderesse. Ce lecteur est relié au microprocesseur par une ligne de transmission 7.

Le dispositif 1 peut en outre être équipé de moyens de stockage tels que des disquettes ou disques amovibles ou non, de moyens de saisie (tels qu'un clavier et/ou un dispositif de pointage du type souris) et de moyens d'affichage, ces différents moyens n'étant pas représentés sur la figure 1.

Par ailleurs, le dispositif 1 comprend un module électrique 8, appelé par la suite module de transfert, qui inclut des moyens de traitement de l'information 9 et une mémoire non volatile associée 10. Ce module est agencé pour définir, dans la mémoire 10, une zone secrète 11 dans laquelle des informations une fois enregistrées, sont inaccessibles depuis l'extérieur du module mais seulement accessibles aux moyens de traitement 9, et une zone libre 12 qui est accessible depuis l'extérieur du module pour une lecture et/ou une écriture d'informations. Chaque zone de mémoire peut comprendre une partie non effaçable ROM et une partie effaçable EPROM, EEPROM, ou constituée de mémoire RAM du type "flash", c'est-à-dire présentant les caractéristiques d'une mémoire EEPROM avec en outre des temps d'accès identiques à ceux d'une RAM classique. Une mémoire volatile RAM non représentée est par ailleurs prévue.

En tant que module 8, on pourra notamment utiliser un microprocesseur à mémoire non volatile autoprogrammable, tel que décrit dans le brevet français n° 2.461.301 au nom de la Demanderesse. Comme indiqué en page 1, ligne 5 à 17 de ce brevet, le caractère autoprogrammable de la mémoire correspond à la possibilité pour un programme f1 situé dans cette mémoire, de modifier un autre programme fj situé également dans cette mémoire en un programme gj. Bien que les moyens à mettre en oeuvre pour réaliser cette autoprogrammation puissent varier selon la technique utilisée pour concevoir les moyens de traitement de l'information 9, on rappelle que, dans le cas où ces moyens de traitement sont constitués par un microprocesseur associé à une mémoire non volatile et selon le brevet précité, ces moyens peuvent inclure :
- des mémoires tampon de données et d'adresses, associées à la mémoire,
- un programme d'écriture dans la mémoire, chargé dans celle-ci et contenant notamment les instructions permettant le maintien d'une part de la tension de programmation de la mémoire, et d'autre part des données à écrire et de leurs adresses, pendant un temps suffisant, ce programme d'écriture pouvant toutefois être remplacé par un automate d'écriture à circuits logiques.

Dans une variante, le microprocesseur du module 8 est remplacé par des circuits logiques implantés dans une puce à semi-conducteurs. En effet, de tels circuits sont aptes à effectuer des calculs, notamment d'authentification et de signature, grâce à de l'électronique câblée, et non microprogrammée. A titre d'exemple, on peut citer le composant de la société SIEMENS commercialisé sous la référence SLE 4436 et celui de la société SGS-THOMSON commercialisé sous la référence ST 1335.

De préférence, le module sera conçu sous forme monolithique sur une seule puce. Il est relié au microprocesseur 2 par une ligne de transmission 13 qui rejoint directement celui-ci, ou par une ligne de transmission 13' qui rejoint la ligne de transmission 7 du lecteur d'objet portatif 6, comme représenté en pointillés sur la figure 1.

Sur le plan matériel, le module 8 pourra être associé de différentes façons au dispositif de traitement de l'information 1. Il pourra tout d'abord être conçu comme totalement intégré au dispositif, par exemple disposé sur une platine interne de celui-ci supportant un ensemble de composants électroniques, voire sur une même puce que lui. Il pourra aussi être conçu comme un élément rapporté et amovible. Il sera par exemple porté, de façon amovible ou non, par une carte à mémoire de masse équipée d'un connecteur selon la norme PCMCIA (Personal Computer Memory Card International Association) enfichée dans un connecteur correspondant du dispositif de traitement de l'information 1, connecteur qui se situera par exemple entre le microprocesseur 2 et le point de jonction entre les lignes de transmission 7, 13' (pointillés portant la référence 14).

Le dispositif de traitement 1 est destiné à coopérer avec deux objets portatifs 21,22 tels que définis ci-dessus en relation avec le lecteur d'objet portatif 6. Chacun d'eux est équipé d'un module électronique qui a la même structure que le module 8 associé au dispositif de traitement 1 et possède donc des moyens de traitement de l'information 23,24, une mémoire non volatile 25,26 comportant une zone protégée 27,28 et une zone libre 29,30, et des moyens d'autoprogrammation.

En variante, la zone secrète du module de transfert 8 et/ou des deux objets portatifs est complétée ou remplacée par une zone dont le niveau de sécurité est inférieur à celui de la zone secrète. Plus précisément, cette zone est non seulement accessible aux moyens de traitement du module de transfert ou des objets portatifs pour une lecture et/ou une écriture d'informations, mais aussi accessible en lecture -et pas en écriture- depuis l'extérieur du module ou des objets. Dans le présent exposé, on désigne par "zone protégée" soit une zone secrète inaccessible de l'extérieur, soit une zone seulement accessible en lecture de l'extérieur. Dans une zone accessible en lecture de l'extérieur peuvent notamment être stockés une clé publique d'un algorithme à clé publique, ou des données ou programmes divers. Dans une zone secrète sont notamment stockées des clés secrètes.

Le procédé décrit ci-après suppose tout d'abord une phase de personnalisation du module de transfert 8 du dispositif de traitement 1, et des deux objets portatifs 21,22 effectuée par l'organisme habilité. A titre d'exemple, la procédure suivante peut être mise en oeuvre. Dans la zone protégée respective 11,27 du module de transfert 8 et du premier objet portatif 21, on dispose une même clé protégée S qui permettra notamment à l'objet portatif d'authentifier le module de transfert. Par ailleurs, on dispose dans la zone protégée 27 du premier objet portatif une clé protégée mère K et, dans la zone protégée 28 du second objet portatif, une clé protégée Kd diversifiée à partir de la clé K, ces deux clés permettant notamment au premier objet portatif d'authentifier le second. Par exemple, la clé diversifiée Kd est obtenue en effectuant un calcul au moyen d'un algorithme cryptographique déterminé, prenant en compte la clé mère K et un paramètre de diversification caractéristique du second objet portatif.

Selon les besoins, la clé protégée S précitée pourrait aussi faire l'objet d'une procédure de diversification.

Dans les zones protégées 27,28 des deux objets portatifs, se trouvent encore respectivement deux programmes P1 et P2 liés à l'application considérée et définissant notamment des règles d'attribution de telle ou telle prestation de service.

L'invention trouve son application dans la mise en oeuvre d'une procédure liée au service considéré, qui exige la présence simultanée des deux objets portatifs 21,22. A cet effet, au moins certains droits inscrits sur l'objet portatif 21 vont être recopiés dans le module de transfert 8.
Dans une première étape, l'objet portatif 21 est inséré dans le lecteur d'objet portatif 6 , et il met en oeuvre avec le module de transfert 8 une procédure mutuelle d'authentification de façon à vérifier que ceux-ci sont effectivement habilités à intervenir dans la délivrance du service considéré. Par exemple, l'objet portatif génère un nombre aléatoire E et l'envoie au module de transfert , lequel effectue un calcul basé sur sa clé protégée S et ce nombre aléatoire E, et il envoie un résultat de calcul R à l'objet de portatif 21. Celui-ci effectue le même calcul de son côté, basé sur sa clé protégée S et le même nombre aléatoire E pour produire un résultat R', et compare les deux résultats R,R' : en cas d'identité, l'objet portatif considère que le module de transfert est authentique. Une procédure de ce genre est notamment décrite dans le brevet français 2.601.795 au nom de la Demanderesse.

La procédure décrite ci-dessus concerne l'authentification du module de transfert 8 par l'objet portatif 21. En sens inverse, le module de transfert 8 pourra authentifier l'objet portatif 21 selon une procédure analogue, la comparaison des résultats R,R' ayant lieu, cette fois-ci dans le module de transfert.

L'authentification mutuelle étant confirmée, le module de transfert 8 et l'objet portatif 21 peuvent échanger des informations, soit en clair, soit sous forme chiffrée en utilisant une clé de chiffrement Sc : dans ce deuxième cas, la clé de chiffrement peut être calculée par le module de transfert et l'objet portatif, de façon connue en soi, à partir d'un algorithme F contenu dans la zone de mémoire protégée 11,27 de ceux-ci, de la clé protégée commune S, et d'un nombre aléatoire Ec généré par le module ou l'objet et transmis à l'autre de ces deux dispositifs. Le chiffrement de l'information par l'un des dispositifs utilise la clé de chiffrement Sc et un algorithme de chiffrement G, l'autre dispositif déchiffrant l'information reçue au moyen des mêmes paramètres ou d'une clé et d'un algorithme de chiffrement corrélés à ceux-ci.

De façon connue en soi, la procédure peut exiger du porteur de l'objet portatif 21 qu'il s'authentifie en présentant à cet objet un code confidentiel par le biais d'un clavier du dispositif de traitement 1, code qui est comparé avec un code de référence contenu dans la zone de mémoire protégée 27 de l'objet.

Une seconde étape du procédé consiste à transférer, de l'objet portatif 21 dans le module de transfert 8, tous les paramètres nécessaires à la délivrance du service considéré. En particulier, la clé protégée K et le programme P1 sont transférés dans la zone de mémoire protégée 11 du module de transfert 8 et permettront à celui-ci d'effectuer, avec le second objet portatif 22, toute opération nécessitant l'usage de cette clé et de ce programme.

Il peut s'avérer nécessaire de limiter la période pendant laquelle le module de transfert 8 exercera les droits qui lui auront été transmis par le premier objet portatif 21. A cet effet, le module de transfert 8 incorporera, dans sa zone protégée 11, un programme agencé pour bloquer son fonctionnement lorsqu'une limite prédéterminée, transmise par le premier objet portatif 21, aura été atteinte. Il peut s'agir notamment d'un temps de fonctionnement s'écoulant à partir du moment où le transfert des droits est intervenu, ou d'un nombre de transactions, la définition d'une transaction étant prédéterminée par le système et pouvant correspondre à une unité de prestation de service déterminée ou à une session, période s'écoulant entre le moment où le deuxième objet portatif 22 est introduit dans le dispositif de traitement 1 et celui où il en est retiré. Au terme de la période d'utilisation autorisée, le module de transfert se bloquera et ne pourra être remis en service que grâce à l'introduction , dans le lecteur 6, d'un objet portatif apte à le déverrouiller, tel que le premier objet portatif 21.

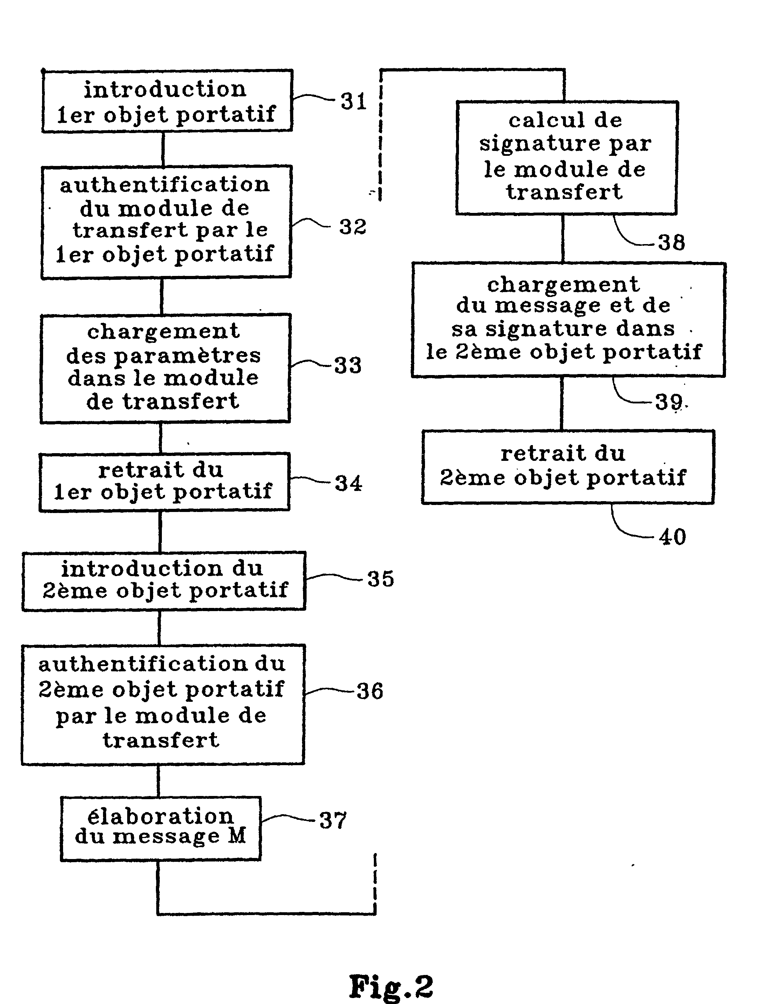

La figure 2 illustre une application possible de l'invention dans laquelle un message M, élaboré sur les moyens de saisie du dispositif de traitement 1, doit être signé par le premier objet portatif 21, le message M et sa signature SG devant être introduits dans le second objet portatif 22.

Dans une première étape 31, le premier objet portatif 21 est introduit dans le lecteur d'objet portatif 6 du dispositif de traitement 1. A l'étape suivante 32, le premier objet portatif 21 authentifie le module de transfert 8 de la manière précédemment décrite. En cas d'authentification confirmée, le premier objet portatif 21 charge sa clé protégée K et son programme P1 dans la zone protégée 11 du module de transfert 8 (étape 33). Ensuite, le premier objet portatif 21 est retiré du dispositif de traitement 1 (étape 34) et le second objet portatif 22 est introduit à sa place (étape 35).

L'authentification du second objet portatif 22 par le module de transfert met en jeu la clé K reçue par ce dernier et la clé Kd de l'objet portatif. Elle s'effectue de la façon indiquée précédemment. A cet effet, le module de transfert devra, à réception d'un paramètre de diversification en provenance de l'objet portatif, recalculer la clé diversifiée Kd de ce dernier à partir de sa clé mère K. Alors, sauf si le message M est déjà présent en mémoire du dispositif de traitement 1 ou en mémoire du premier objet portatif 21, ce message est introduit dans le dispositif de traitement par le porteur du premier objet portatif 21, par exemple par les moyens de saisie de ce dispositif (étape 37). La mise en forme du message M peut faire intervenir les programmes P1 et P2.

A l'étape suivante 38, le module de transfert 8 calcule la signature SG du message M, signature qui lie de façon indissociable le contenu du message avec l'identité de l'émetteur de celui-ci, c'est-à-dire en l'espèce la clé protégée K du premier objet portatif 21. En pratique, le module de transfert incorpore dans sa zone de mémoire protégée 11 un algorithme de calcul de signature H qui s'y trouve à demeure ou qui a été transféré par le premier objet portatif 21. L'algorithme H, prenant en compte le message M -de préférence une forme contractée de celui-ci- et la clé protégée K du premier objet portatif 21, produit un résultat de calcul constituant ladite signature SG.

A l'étape 39, le message M et sa signature SG sont transférés dans la mémoire 26 du second objet portatif 22. Ce dernier est ensuite retiré du dispositif de traitement 1 (étape 40).

En conclusion, il apparaît donc que le procédé décrit a permis de faire coopérer les deux objets portatifs 21,22 avec le dispositif de traitement 1 dans une procédure commune, et ce en n'utilisant que la seule ligne de transmission 7 reliant le lecteur d'objet portatif 6 au microprocesseur 2 du dispositif de traitement.

On notera que les algorithmes précités d'élaboration d'une clé diversifiée Kd ou d'une clé de chiffrement Sc, de chiffrement d'une information, et de calcul de signature pourront être constitués par le même algorithme.

Bien que des algorithmes symétriques à clé protégée aient été présentés ci-dessus, on pourra naturellement mettre à profit des algorithmes dissymétriques à clé publique, de façon qu'au moins l'un des objets portatifs ou le module de transfert incorpore, au lieu d'une clé secrète, une clé publique. Par exemple, l'organisme dispose initialement dans le second objet portatif 22 une signature élaborée grâce à l'algorithme, en fonction d'une donnée d'identification de cet objet et d'une clé secrète, l'authentification de cet objet par le module de transfert 8 faisant intervenir une clé publique correspondante pour vérifier cette signature, cette clé publique étant initialement dans la mémoire du premier objet portatif 21.

On peut citer, parmi différentes applications de l'invention, celle du domaine de la santé, dans laquelle la clé protégée K définit les droits d'un médecin et la clé protégée Kd ceux d'un patient, le procédé décrit précédemment permettant au médecin d'introduire dans l'objet portatif 22 du patient un message constitué par une ordonnance de soins à laquelle est associée la signature du médecin, signature vérifiable par tout organisme possédant les clés publiques corrélées aux clés secrètes K, Kd.

Dans le cas où le dialogue avec le second objet portatif 22 nécessiterait l'intervention simultanée des droits de plusieurs premiers objets portatifs 21, on chargerait successivement, dans le module de transfert 8, les droits nécessaires de ces différents premiers objets 21, en introduisant tour à tour ces objets portatifs dans le lecteur 6. Ensuite, le dialogue entre le module de transfert 8 et le second objet portatif 22 serait établi.

L'invention s'appliquera aussi au cas où le premier objet portatif 21 communique avec le dispositif de traitement 1, non pas localement au moyen du lecteur d'objet portatif 6, mais à distance par l'intermédiaire d'une ligne téléinformatique ou téléphonique reliée à l'interface de transmission. Le procédé selon l'invention permet de libérer cette ligne une fois le transfert d'informations effectué entre le premier objet portatif et le dispositif de traitement, pour l'affecter à d'autres tâches pendant que les deux objets portatifs 21,22 dialogueront entre eux.

Par ailleurs, l'invention s'applique, non seulement dans le cas d'un dialogue entre les objets portatifs alors que le dispositif de traitement 1 est hors ligne, mais aussi au cas où ce dernier est en ligne en vue d'un dialogue avec un dispositif éloigné délivrant la prestation de service recherchée ou intervenant dans celle-ci.

## Revendications

1. Procédé de chargement d'un dispositif de traitement de l'information (1) comprenant des moyens de traitement de l'information (2), une mémoire (3,4), et des moyens de coopération (6) avec un premier objet portatif (21), le premier objet portatif comportant des moyens de traitement de l'information (23) et une mémoire non volatile (25) contenant des données (S, K) et/ ou des programmes (P1), procédé comprenant les étapes consistant à :
- faire coopérer le dispositif de traitement (1) avec le premier objet portatif (21) ;
- transférer dans la mémoire (3,4) du dispositif de traitement lesdites données (K) et/ou programmes (P1) provenant de la mémoire du premier objet portatif ; et
- bloquer le fonctionnement du dispositif de traitement suite à un évènement déterminé,
**caractérisé en ce que** le dispositif de traitement inclut un module (8) comprenant des moyens (9) de traitement de l'information et une mémoire non volatile (10) incluant une zone protégée (11) accessible en lecture et écriture aux moyens de traitement mais inaccessible au moins en écriture depuis l'extérieur du module, **en ce que** la mémoire non volatile (25) du premier objet portatif (21) inclut une zone protégée (27) accessible en lecture et écriture aux moyens de traitement mais inaccessible au moins en écriture depuis l'extérieur de l'objet portatif, qui contient lesdites données (K) et/ou programmes (P1), **en ce que** l'on transfert lesdites données (K) et/ou programmes (P1) dans la zone protégée (11) du module, et **en ce que** ledit événement déterminé provoquant le blocage est une période prédéterminée ou un nombre prédéterminé de transactions, la zone protégée (11) du module (8) contenant à cet effet des informations de blocage correspondantes, propres à déclencher ledit blocage.

2. Procédé de chargement d'un dispositif de traitement de l'information (1) pour délivrer une prestation de service déterminée nécessitant l'intervention d'un premier objet portatif (21) et d'un second objet portatif (22), le dispositif de traitement de l'information (1) comprenant des moyens de traitement de l'information (2), une mémoire (3,4), et des moyens de coopération (6) avec un objet portatif (21), chaque objet portatif comportant des moyens de traitement de l'information (23,24) et une mémoire non volatile (25,26) contenant des données (S, K) et/ ou des programmes (P1), procédé comprenant les étapes consistant à :
- faire coopérer le dispositif de traitement (1) avec le premier objet portatif (21) ;
- transférer dans la mémoire (3,4) du dispositif de traitement lesdites données (K) et/ou programmes (P1) provenant de la mémoire du premier objet portatif ;
- faire coopérer le dispositif de traitement avec le second objet portatif (22) ; et
- procéder à la délivrance dudit service en utilisant lesdites données (K) et/ou programmes (P1) transférés dans le module (8) et ceux (Kd, P2) contenus dans le second objet portatif (22),
**caractérisé en ce que** le dispositif de traitement inclut un module (8) comprenant des moyens (9) de traitement de l'information et une mémoire non volatile (10) incluant une zone protégée (11) accessible en lecture et écriture aux moyens de traitement mais inaccessible au moins en écriture depuis l'extérieur du module, **en ce que** la mémoire non volatile (25) de chaque objet portatif (21) inclut une zone protégée (27) accessible en lecture et écriture aux moyens de traitement mais inaccessible au moins en écriture depuis l'extérieur de l'objet portatif, qui contient lesdites données (K) et/ou programmes (P1), ces données et/ou programmes définissant les droits et obligations respectifs de ces objets portatifs vis-à-vis de ladite prestation de service, et **en ce que** l'on transfert lesdites données (K) et/ou programmes (P1) de la mémoire du premier objet portatif dans la zone protégée (11) du module.

3. Procédé selon la revendication 2, pour établir un dialogue entre les premier et second objets portatifs, qui nécessite l'utilisation desdites données (K, Kd) et/ou programmes (P1, P2) issus des zones protégées de ces objets portatifs, procédé dans lequel, une fois que le second objet portatif coopère avec le dispositif de traitement, on met en communication le module (8) et le second objet portatif (22) en utilisant lesdites données et/ou programmes.

4. Procédé selon la revendication 3, dans lequel lesdites données transférées du premier objet portatif (21) vers le module (8) comprennent une clé protégée (K) corrélée à une autre clé (Kd) située dans la zone protégée (28) de la mémoire du second objet portatif (22) de telle sorte que le module et le second objet portatif puissent mettre en oeuvre une procédure cryptographique mutuelle, basée sur ces deux clés.

5. Procédé selon l'une quelconque des revendications précédentes, dans lequel le premier objet portatif (21) contient, dans la zone protégée (27) de sa mémoire, une clé (S) corrélée à une autre clé (S) située dans la zone protégée (11) de la mémoire du module (8) et, avant de transférer des données ou programmes vers ce dernier, on effectue une procédure cryptographique mutuelle entre le premier objet portatif et le module qui est basée sur ces deux clés (S).

6. Procédé selon l'une quelconque des revendications précédentes, dans lequel le premier objet portatif (21) contient une clé et un algorithme de chiffrement tandis que le module (8) contient une clé et un algorithme de déchiffrement corrélés respectivement à la clé et à l'algorithme du premier objet portatif, procédé consistant en outre à chiffrer lesdites données (K) et/ou programmes(P1) dans le premier objet portatif avant leur transfert vers le module, au moyen de la clé et de l'algorithme de chiffrement, et à déchiffrer ces données et/ou programmes dans le module après leur transfert, au moyen de la clé et de l'algorithme de déchiffrement.

7. Dispositif de traitement de l'information (1) comprenant des moyens de traitement de l'information (2), une mémoire (3,4), et des moyens de coopération (6) avec un premier objet portatif (21), le premier objet portatif comportant des moyens de traitement de l'information (23) et une mémoire non volatile (25) contenant des données (S, K) et/ ou des programmes (P1), le dispositif de traitement comprenant des moyens agencés pour déclencher et contrôler une procédure de dialogue entre le dispositif de traitement (1) et le premier objet portatif (21), à savoir :
- des moyens pour faire coopérer le dispositif de traitement (1) avec le premier objet portatif (21) ;
- des moyens pour transférer dans la mémoire (3,4) du dispositif de traitement lesdites données (K) et/ou programmes (P1) provenant de la mémoire du premier objet portatif ; et
- des moyens pour bloquer le fonctionnement du dispositif de traitement suite à un événement déterminé,
**caractérisé en ce que** le dispositif de traitement inclut un module (8) comprenant des moyens (9) de traitement de l'information et une mémoire non volatile (10) incluant une zone protégée (11) accessible en lecture et écriture aux moyens de traitement mais inaccessible au moins en écriture depuis l'extérieur du module, **en ce que** la mémoire non volatile (25) du premier objet portatif (21) inclut une zone protégée (27) accessible en lecture et écriture aux moyens de traitement mais inaccessible au moins en écriture depuis l'extérieur de l'objet portatif, qui contient lesdites données (K) et/ou programmes (P1), **en ce que** le transfert desdites données (K) et/ou programmes (P1) s'effectue dans la zone protégée (11) du module, et **en ce que** ledit évènement déterminé provoquant le blocage est une période prédéterminée ou un nombre prédéterminé de transactions, la zone protégée (11) du module (8) contenant à cet effet des informations de blocage correspondantes, propres à déclencher ledit blocage.

8. Dispositif de traitement de l'information (1) pour délivrer une prestation de service déterminée nécessitant l'intervention d'un premier objet portatif (21) et d'un second objet portatif (22), le dispositif de traitement de l'information (1) comprenant des moyens de traitement de l'information (2), une mémoire (3,4), et des moyens de coopération (6) avec un objet portatif (21), chaque objet portatif comportant des moyens de traitement de l'information (23,24) et une mémoire non volatile (25,26) contenant des données (S, K) et/ ou des programmes (P1), le dispositif de traitement comprenant des moyens agencés pour déclencher et contrôler une procédure de dialogue entre le dispositif de traitement (1) et le premier objet portatif (21), à savoir :
- des moyens pour faire coopérer le dispositif de traitement (1) avec le premier objet portatif (21) ;
- des moyens pour transférer dans la mémoire (3,4) du dispositif de traitement lesdites données (K) et/ou programmes (P1) provenant de la mémoire du premier objet portatif ;
- des moyens pour faire coopérer le dispositif de traitement avec le second objet portatif (22) ; et
- des moyens pour procéder à la délivrance dudit service en utilisant lesdites données (K) et/ou programmes (P1) transférés dans le module (8) et ceux (Kd, P2) contenus dans le second objet portatif (22),
**caractérisé en ce que** le dispositif de traitement inclut un module (8) comprenant des moyens (9) de traitement de l'information et une mémoire non volatile (10) incluant une zone protégée (11) accessible en lecture et écriture aux moyens de traitement mais inaccessible au moins en écriture depuis l'extérieur du module, **en ce que** la mémoire non volatile (25) de chaque objet portatif (21) inclut une zone protégée (27) accessible en lecture et écriture aux moyens de traitement mais inaccessible au moins en écriture depuis l'extérieur de l'objet portatif, qui contient lesdites données (K) et/ou programmes (P1), ces données et/ou programmes définissant les droits et obligations respectifs de ces objets portatifs vis-à-vis de ladite prestation de service, et **en ce que** le transfert desdites données (K) et/ou programmes (P1) s'effectue de la mémoire du premier objet portatif dans la zone protégée (11) du module.

9. Dispositif selon la revendication 7 ou la revendication 8, dans lequel lesdits moyens spécialement agencés pour déclencher et contrôler la procédure de dialogue entre le module (8) et le ou chaque objet portatif (21,22) comprennent un programme contenu dans la mémoire (3,4) du dispositif de traitement (1).

10. Dispositif selon la revendication 8, qui comprend des moyens pour bloquer le fonctionnement du module au-delà d'une période prédéterminée ou d'un nombre prédéterminé de transactions, la zone protégée (11) du module (8) contenant à cet effet des informations de blocage correspondantes, propres à déclencher ledit blocage.

## Patentansprüche

1. Lade-Verfahren einer Informationsverarbeitungsvorrichtung (1) mit informationsverarbeitenden Mitteln (2), einem Speicher (3,4) und Mitteln zur Kooperation (6) mit einem ersten tragbaren Gegenstand (21), der informationsverarbeitende Mittel (23) und einen permanenten Speicher (25) mit Daten (S, K) und/oder Programmen (P1) enthält, wobei das Verfahren folgende Schritte umfasst:
- Herstellen einer Kooperation zwischen der Verarbeitungsvorrichtung (1) und dem ersten tragbaren Gegenstand (21);
- Übertragen der besagten Daten (K) und/oder Programme (P1) aus dem Speicher des ersten tragbaren Gegenstands in den Speicher (3,4) der Informations-verarbeitungsvorrichtung und
- Sperren der Funktion der Verarbeitungsvorrichtung nach einem bestimmten Ereignis,
**dadurch gekennzeichnet, dass** die Verarbeitungsvorrichtung ein Modul (8) mit Mitteln (9) zur Informationsverarbeitung und einem permanenten Speicher (10) mit einer geschützten Zone (11) einschließt, die für die Verarbeitungsmittel zum Lesen und Schreiben zugänglich ist, jedoch außerhalb des Moduls zumindest zum Schreiben unzugänglich ist, dass der permanente Speicher (25) des ersten tragbaren Gegenstands (21) eine geschützte Zone (27) einschließt, die für die Verarbeitungsmittel zum Lesen und Schreiben zugänglich ist, jedoch außerhalb des tragbaren Gegenstands zumindest zum Schreiben unzugänglich ist und die besagten Daten (K) und/oder Programme (P1) enthält, dass man die besagten Daten (K) und/oder Programme (P1) in die geschützte Zone (11) des Moduls überträgt und dass das Sperren hervorrufende bestimmte Ereignis ein vorbestimmter Zeitraum oder eine vorbestimmte Anzahl an Transaktionen ist, wobei die geschützte Zone (11) des Moduls (8) dazu entsprechende Sperrinformationen enthält, die dazu geeignet sind, die Sperre auszulösen.

2. Lade-Verfahren einer Informationsverarbeitungsvorrichtung (1) zum Erbringen einer bestimmten Dienstleistung, die den Einsatz eines ersten tragbaren Gegenstands (21) und eines zweiten tragbaren Gegenstands (22) erfordert, wobei die Informationsverarbeitungsvorrichtung (1) informationsverarbeitende Mittel (2), einen Speicher (3,4) und Mittel zur Kooperation (6) mit einem tragbaren Gegenstand (21) umfasst und jeder tragbare Gegenstand informationsverarbeitende Mittel (23,24) und einen permanenten Speicher (25,26) mit Daten (S, K) und/oder Programmen (P1) enthält und das Verfahren folgende Schritte umfasst:
- Herstellen einer Kooperation zwischen der Verarbeitungsvorrichtung (1) und dem ersten tragbaren Gegenstand (21);
- Übertragen der besagten Daten (K) und/oder Programme (P1) aus dem Speicher des ersten tragbaren Gegenstands in den Speicher (3,4) der Verarbeitungsvorrichtung;
- Herstellen einer Kooperation zwischen der Verarbeitungsvorrichtung und dem zweiten tragbaren Gegenstand (22); und
- Erbringen der besagten Dienstleistung unter Anwendung der besagten in das Modul (8) übertragenen Daten (K) und/oder Programme (P1) und der (Kd, P2) im zweiten tragbaren Gegenstand (22) enthaltenen,
**dadurch gekennzeichnet, dass** die Verarbeitungsvorrichtung ein Modul (8) mit Mitteln (9) zur Informationsverarbeitung und einem permanenten Speicher (10) mit einer geschützten Zone (11) einschließt, die für die Verarbeitungsmittel zum Lesen und Schreiben zugänglich ist, jedoch außerhalb des Moduls zumindest zum Schreiben unzugänglich ist, dass der permanente Speicher (25) jedes tragbaren Gegenstands (21) eine geschützte Zone (27) einschließt, die für die Verarbeitungsmittel zum Lesen und Schreiben zugänglich ist, jedoch außerhalb des tragbaren Gegenstands zumindest zum Schreiben unzugänglich ist und die besagten Daten (K) und/oder Programme (P1) enthält, wobei diese Daten und/oder Programme die jeweiligen Rechte und Verpflichtungen dieser tragbaren Gegenstände gegenüber der besagten Dienstleistung definieren und dass man diese Daten (K) und/oder Programme (P1) vom Speicher des ersten tragbaren Gegenstands in die geschützte Zone (11) des Moduls überträgt.

3. Verfahren nach Anspruch 2 zur Herstellung eines Dialogs zwischen dem ersten und zweiten tragbaren Gegenstand, das die Anwendung der besagten Daten (K, Kd) und/oder Programme (P1, P2) aus den geschützten Zonen dieser tragbaren Gegenstände erfordert, wobei bei diesem Verfahren, nachdem der zweite tragbare Gegenstand mit der Verarbeitungsvorrichtung zusammenwirkt, das Modul (8) und der zweite tragbare Gegenstand (22) unter Anwendung der besagten Daten und/oder Programme miteinander in Kommunikation gebracht werden.

4. Verfahren nach Anspruch 3, bei dem die in das Modul (8) übertragenen Daten des ersten tragbaren Gegenstands (21) einen geschützten Schlüssel (K) umfassen, der mit einem anderen Schlüssel (Kd) in der geschützten Zone (28) des Speichers des zweiten tragbaren Gegenstands (22) derart korreliert, dass das Modul und der zweite tragbare Gegenstand eine gegenseitige auf diese beiden Schlüssel basierende Verschlüsselungsprozedur anwenden können.

5. Verfahren nach irgendeinem der vorausgehenden Ansprüche, bei dem der erste tragbare Gegenstand (21) in der geschützten Zone (27) seines Speichers einen Schlüssel (S) enthält, der mit einem anderen Schlüssel (S) in der geschützten Zone (11) des Modulspeichers (8) korreliert und bei dem vor der Übertragung der Daten oder Programme in das Modul eine gegenseitige Verschlüsselungsprozedur zwischen dem ersten tragbaren Gegenstand und dem Modul ausgeführt wird, die auf diese zwei Schlüssel (S) beruht.

6. Verfahren nach irgendeinem der vorausgehenden Ansprüche, bei dem der erste tragbare Gegenstand (21) einen Schlüssel und einen Verschlüsselungsalgorithmus enthält, während das Modul (8) einen Schlüssel und einen Entschlüsselungsalgorithmus enthält, die jeweils mit dem Schlüssel und dem Algorithmus des ersten tragbaren Gegenstands korrelieren, wobei das Verfahren darüber hinaus darin besteht, die besagten Daten (K) und/oder Programme (P1) im ersten tragbaren Gegenstand vor deren Übertragung in das Modul mittels dem Schlüssel und dem Verschlüsselungsalgorithmus zu verschlüsseln und diese Daten und/oder Programme im Modul nach deren Übertragung mittels dem Schlüssel und dem Entschlüsselungsalgorithmus zu entschlüsseln.

7. Informationsverarbeitungsvorrichtung (1) mit informationsverarbeitenden Mitteln (2), einem Speicher (3,4) und Mittel zur Kooperation (6) mit einem ersten tragbaren Gegenstand (21), wobei der erste tragbare Gegenstand informationsverarbeitende Mittel (23) und einen permanenten Speicher (25) mit Daten (S, K) und/oder Programmen (P1) umfasst und die Verarbeitungsvorrichtung Mittel zum Auslösen und Kontrollieren einer Dialogprozedur zwischen der Verarbeitungsvorrichtung (1) und dem ersten tragbaren Gegenstand (21) umfasst, nämlich:
- Mittel zur Kooperation zwischen der Verarbeitungsvorrichtung (1) und dem ersten tragbaren Gegenstand (21);
- Mittel zum Übertragen der besagten Daten (K) und/oder Programme (P1) vom Speicher des ersten tragbaren Gegenstands in den Speicher (3,4) der Verarbeitungsvorrichtung; und
- Mittel zum Sperren der Funktion der Verarbeitungsvorrichtung nach einem bestimmten Ereignis,
**dadurch gekennzeichnet, dass** die Verarbeitungsvorrichtung ein Modul (8) mit informationsverarbeitenden Mitteln (9) und einem permanenten Speicher (10) mit einer geschützten Zone (11) umfasst, die für die Verarbeitungsmittel zum Lesen und Schreiben zugänglich ist, jedoch außerhalb des Moduls zumindest zum Schreiben unzugänglich ist, dass der permanente Speicher (25) des ersten tragbaren Gegenstands (21) eine geschützte Zone (27) einschließt, die für die Verarbeitungsmittel zum Lesen und Schreiben zugänglich ist, jedoch außerhalb des tragbaren Gegenstands zumindest zum Schreiben unzugänglich ist und die besagten Daten (K) und/oder Programme (P1) enthält, dass man die besagten Daten (K) und/oder Programme (P1) in die geschützte Zone (11) des Moduls überträgt und dass das Sperren hervorrufende bestimmte Ereignis ein vorbestimmter Zeitraum oder eine vorbestimmte Anzahl an Transaktionen ist, wobei die geschützte Zone (11) des Moduls (8) dazu entsprechende Sperrinformationen enthält, die dazu geeignet sind, die Sperre auszulösen.

8. Informationsverarbeitungsvorrichtung (1) zum Erbringen einer bestimmten Dienstleistung, die den Einsatz eines ersten tragbaren Gegenstands (21) und eines zweiten tragbaren Gegenstands (22) erfordert, wobei die Informationsverarbeitungsvorrichtung (1) informationsverarbeitende Mittel (2), einen Speicher (3,4) und Mittel zur Kooperation (6) mit einem tragbaren Gegenstand (21) umfasst und jeder tragbare Gegenstand informationsverarbeitende Mittel (23,24) und einen permanenten Speicher (25,26) mit Daten (S, K) und/oder Programmen (P1) umfasst und die Verarbeitungsvorrichtung Mittel zum Auslösen und Kontrollieren einer Dialogprozedur zwischen der Verarbeitungsvorrichtung (1) und dem ersten tragbaren Gegenstand (21) umfasst, nämlich:
- Mittel zum Herstellen einer Kooperation zwischen der Verarbeitungsvorrichtung (1) und dem ersten tragbaren Gegenstand (21);
- Mittel zum Übertragen der besagten Daten (K) und/oder Programme (P1) aus dem Speicher des ersten tragbaren Gegenstands in den Speicher (3,4) der Verarbeitungsvorrichtung;
- Mittel zum Herstellen einer Kooperation zwischen der Verarbeitungsvorrichtung und dem zweiten tragbaren Gegenstand (22); und
- Mittel zum Erbringen der besagten Dienstleistung unter Anwendung der besagten in das Modul (8) übertragenen Daten (K) und/oder Programme (P1) und der (Kd, P2) im zweiten tragbaren Gegenstand (22) enthaltenen,
**dadurch gekennzeichnet, dass** die Verarbeitungsvorrichtung ein Modul (8) mit Mitteln (9) zur Informationsverarbeitung und einem permanenten Speicher (10) mit einer geschützten Zone (11) einschließt, die für die Verarbeitungsmittel zum Lesen und Schreiben zugänglich ist, jedoch außerhalb des Moduls zumindest zum Schreiben unzugänglich ist, dass der permanente Speicher (25) jedes tragbaren Gegenstands (21) eine geschützte Zone (27) einschließt, die für die Verarbeitungsmittel zum Lesen und Schreiben zugänglich ist, jedoch außerhalb des tragbaren Gegenstands zumindest zum Schreiben unzugänglich ist und die besagten Daten (K) und/oder Programme (P1) enthält, wobei diese Daten und/oder Programme die jeweiligen Rechte und Verpflichtungen dieser tragbaren Gegenstände gegenüber der besagten Dienstleistung definieren und dass man diese Daten (K) und/oder Programme (P1) vom Speicher des ersten tragbaren Gegenstands in die geschützte Zone (11) des Moduls überträgt.

9. Vorrichtung nach Anspruch 7 oder 8, bei der die speziell zum Auslösen und Kontrollieren der Dialogprozedur zwischen dem Modul (8) und dem oder jedem tragbaren Gegenstand (21,22) eingerichteten Mittel ein im Speicher (3,4) der Verarbeitungsvorrichtung (1) enthaltenes Programm umfassen.

10. Vorrichtung nach Anspruch 8, die Mittel zum Sperren der Funktion des Moduls über einen vorbestimmten Zeitraum oder über eine vorbestimmte Anzahl von Transaktionen hinaus umfasst, wobei die geschützte Zone (11) des Moduls (8) dazu entsprechende Sperrinformationen enthält, die dazu geeignet sind, die besagte Sperre auszulösen.

## Claims

1. Method to load an information processing device (1) comprising information processing means (2), a memory (3,4), and means to co-operate (6) with a first portable object (21), the first portable object including information processing means (23) and a non volatile memory (25) containing data (S, K) and/or programs (P1), method comprising the following steps:
- have the processing device (1) co-operate with the first portable object (21);
- transfer into the memory (3,4) of the processing device said data (K) and/or programs (P1) from the memory of the first portable object; and
- block the operation of the processing device after a given event,
**characterised in that** the processing device includes a module (8) comprising information processing means (9) and a non volatile memory (10) including a protected area (11) with read and write access by the processing means but at least write protected from outside the module, **in that** the non volatile memory (25) of the first portable object (21) includes a protected area (27) with read and write access by the processing means but at least write protected from outside the portable object, which contains said data (K) and/or programs (P1), **in that** said data (K) and/or programs (P1) are transferred into the protected area (11) of the module, and **in that** said given event causing the blocking is a predetermined period or a predetermined number of transactions, the protected area (11) of the module (8) containing for this purpose corresponding blocking information, able to trigger said blocking.

2. Method to load an information processing device (1) to supply a given service requiring the intervention of a first portable object (21) and of a second portable object (22), the information processing device (1) comprising information processing means (2), a memory (3,4), and means to co-operate (6) with a portable object (21), each portable object including information processing means (23,24) and a non volatile memory (25,26) containing data (S, K) and/or programs (P1), method comprising the following steps:
- have the processing device (1) co-operate with the first portable object (21);
- transfer into the memory (3,4) of the processing device said data (K) and/or programs (P1) from the memory of the first portable object;
- have the processing device co-operate with the second portable object (22); and
- supply said service using said data (K) and/or programs (P1) transferred into the module (8) and those (Kd, P2) contained in the second portable object (22),
**characterised in that** the processing device includes a module (8) comprising information processing means (9) and a non volatile memory (10) including a protected area (11) with read and write access by the processing means but at least write protected from outside the module, **in that** the non volatile memory (25) of each portable object (21) includes a protected area (27) with read and write access by the processing means but at least write protected from outside the portable object, which contains said data (K) and/or programs (P1), this data and/or programs defining the respective rights and obligations of these portable objects with respect to said service, and **in that** said data (K) and/or programs (P1) are transferred from the memory of the first portable object into the protected area (11) of the module.

3. Method according to claim 2, to set up a dialogue between the first and second portable objects, which requires the use of said data (K, Kd) and/or programs (P1, P2) from the protected areas of these portable objects, method in which, once the second portable object is co-operating with the processing device, communication is set up between the module (8) and the second portable object (22) using said data and/or programs.

4. Method according to claim 3, in which said data transferred from the first portable object (21) to the module (8) comprises a protected key (K) correlated with another key (Kd) stored in the protected area (28) of the memory of the second portable object (22) such that the module and the second portable object can implement a mutual cryptographic procedure, based on these two keys.

5. Method according to any of the above claims, in which the first portable object (21) contains, in the protected area (27) of its memory, a key (S) correlated with another key (S) stored in the protected area (11) of the memory of the module (8) and, before transferring data or programs to the latter, a mutual cryptographic procedure based on these two keys (S) is performed between the first portable object and the module.

6. Method according to any of the above claims, in which the first portable object (21) contains a key and an encryption algorithm whereas the module (8) contains a key and a decryption algorithm correlated respectively with the key and the algorithm of the first portable object, method also consisting of encrypting said data (K) and/or programs (P1) in the first portable object before their transfer to the module, using the key and the encryption algorithm, and of decrypting this data and/or programs in the module after their transfer, using the key and decryption algorithm.

7. Information processing device (1) comprising information processing means (2), a memory (3,4), and means to co-operate (6) with a first portable object (21), the first portable object including information processing means (23) and a non volatile memory (25) containing data (S, K) and/or programs (P1), the processing device comprising means designed to trigger and check a dialogue procedure between the processing device (1) and the first portable object (21), i.e.:
- means to have the processing device (1) co-operate with the first portable object (21);
- means to transfer into the memory (3,4) of the processing device said data (K) and/or programs (P1) from the memory of the first portable object; and
- means to block the operation of the processing device after a given event,
**characterised in that** the processing device includes a module (8) comprising information processing means (9) and a non volatile memory (10) including a protected area (11) with read and write access by the processing means but at least write protected from outside the module, **in that** the non volatile memory (25) of the first portable object (21) includes a protected area (27) with read and write access by the processing means but at least write protected from outside the portable object, which contains said data (K) and/or programs (P1), **in that** said data (K) and/or programs (P1) are transferred into the protected area (11) of the module, and **in that** said given event causing the blocking is a predetermined period or a predetermined number of transactions, the protected area (11) of the module (8) containing for this purpose corresponding blocking information, able to trigger said blocking.

8. Information processing device (1) to supply a given service requiring the intervention of a first portable object (21) and of a second portable object (22), the information processing device (1) comprising information processing means (2), a memory (3,4), and means to co-operate (6) with a portable object (21), each portable object including information processing means (23,24) and a non volatile memory (25,26) containing data (S, K) and/or programs (P1), the processing device comprising means designed to trigger and check a dialogue procedure between the processing device (1) and the first portable object (21), i.e.:
- means to have the processing device (1) co-operate with the first portable object (21);
- means to transfer into the memory (3,4) of the processing device said data (K) and/or programs (P1) from the memory of the first portable object;
- means to have the processing device co-operate with the second portable object (22); and
- means to supply said service using said data (K) and/or programs (P1) transferred into the module (8) and those (Kd, P2) contained in the second portable object (22),
**characterised in that** the processing device includes a module (8) comprising information processing means (9) and a non volatile memory (10) including a protected area (11) with read and write access by the processing means but at least write protected from outside the module, **in that** the non volatile memory (25) of each portable object (21) includes a protected area (27) with read and write access by the processing means but at least write protected from outside the portable object, which contains said data (K) and/or programs (P1), this data and/or programs defining the respective rights and obligations of these portable objects with respect to said service, and **in that** said data (K) and/or programs (P1) are transferred from the memory of the first portable object into the protected area (11) of the module.

9. Device according to claim 7 or 8, in which said means especially designed to trigger and check the dialogue procedure between the module (8) and the or each portable object (21,22) comprise a program stored in the memory (3,4) of the processing device (1).

10. Device according to claim 8, which comprises means to block the operation of the module after a predetermined period or a predetermined number of transactions, the protected area (11) of the module (8) containing for this purpose corresponding blocking information, able to trigger said blocking.
